Europäisches Patentamt

European Patent Office

Office européen des brevets

(11) Publication number: **0 023 105**
A1

(12) **EUROPEAN PATENT APPLICATION**

(21) Application number: 80302252.4

(22) Date of filing: 03.07.80

(51) Int. Cl.³: **B 60 R 16/02**
**G 08 C 15/00, H 04 L 11/16**

(30) Priority: 06.07.79 GB 7923616
06.07.79 GB 7923617
06.07.79 GB 7923618
06.07.79 GB 7923619

(43) Date of publication of application:
28.01.81 Bulletin 81/4

(84) Designated Contracting States:
AT BE CH DE FR GB IT LI LU NL SE

(71) Applicant: WARD & GOLDSTONE LIMITED
Frederick Road
Salford, M6 6AP(GB)

(72) Inventor: Hampshire, Michael John
792 Halifax Road
Liversedge West Yorkshire(GB)

(72) Inventor: Williamson, Jonathan Hugh
25 Westbourne Avenue Clifton
Swinton Manchester M27 2NN(GB)

(74) Representative: Downey, William Gerrard et al,
WILSON GUNN & ELLIS 41 Royal Exchange Cross Street
Manchester, M2 7DB(GB)

(54) System and method for handling multiplex information.

(57) A multiplex information handling system for a vehicle
has a number of transmitters (T1, T2) and a number of receiv-
ers all interconnected by a common power bus and signal bus
(5). Each transmitter is coded and transmits datum bits in a
specific serial order. Each receiver contains a R.O.M. to
instruct it to respond to a datum bit in a certain position from a
certain transmitter. Each transmitter may be provided with
means (G1, G3, G2, G4) to abort its own transmission should
the waveform transmitted not correspond with the intended
waveform and each transmitter and receiver can be con-
nected to the signal bus via fuses such that a faulty transmitter
or receiver can be blown off the bus. Means may be provided
for detecting and preventing the exclusive occupation of the
signal bus by one transmitter. Signal priority establishing
means can be provided to control the transmission of signals
along the bus representative of the state of control equipment
controlled by the system and delay means can delay the
implementation of a control signal until a priority remedial
signal is received.

Fig. 5

# A MULTIPLEX INFORMATION HANDLING SYSTEM

The present invention relates to an information handling system.

The system is particularly applicable to vehicles. In present day vehicles the electrical equipment is usually controlled through a wiring harness. As the electrical equipment of vehicles has increased, so also has the complexity of the corresponding wiring harness. This has led to difficulties in installation, increased expense, and, where faults have occurred difficulties in locating which part of the harness the fault is located in and which part therefore required replacement. Even where faults are quite quickly located, the actual repair involving the replacement or repair of a part of the wiring harness or in extreme cases the replacement of the whole harness is an expensive and time consuming operation often involving the use of skilled labour or complex fault diagnostic equipment.

Attempts have been made to overcome the disadvantages of such systems using semiconductor based hardware with a central monitor or microprocessor controlling each of a plurality of local stations controlling predetermined items of the vehicle electrical equipment. The disadvantages of such an arrangement are that the microprocessor is at the present time quite expensive, certainly the most expensive part of the overall system and should a fault occur in it it is correspondingly difficult to put right. Not only that, since all the local stations are subservient to the microprocessor, should a fault occur the vehicle often suffers a complete electrical shutdown for it is usually not then possible for the local stations to be interrogated and/or instructed concerning their status and the status of the individual items of electrical equipment controlled by them.

In copending United Kingdom patent application No. 9493/78 filed by the present Applicants on 10th March, 1978, a system is described and claimed for reducing or eliminating these disadvantages. Such a multiplex information handling system comprises a plurality of local processing units interconnected by a signal bus and power bus each unit comprising means for receiving signals and means for transmitting signals along the signal bus whereby information concerning the operational state of one or more pieces of control equipment may be fed to each of the local processing units via the signal bus and information concerning the operational state of pieces of equipment adapted to be controlled by the pieces of control equipment may also be fed to each of the local processing units.

In the above described and claimed information handling system where, using the multiplexing principle, several datum channels are sent serially down a single highway, it is necessary to provide a method of coding such that the appropriate datum provided at a given input port is routed to t he desired output port. Normally each output port is given an address and the datum is usually accompanied by a code defining the output address of the destination of the datum.

According to one aspect of the present invention, there is provided a multiplex information handling system comprising one or more transmitters, the or each transmitter having a plurality of data inputs, the means for transmitting information therefrom in a predetermined serial code to thereby identify a particular input and one or more receivers the transmitters and receivers all being connected by a signal bus, and the or each receiving having an instruction store operative to instruct the receiver which input datum to respond to.

According to another aspect of the present invention, there is provided a method of operating a multiplex information handling system incorporating one or more transmitters, the or each transmitter having a plurality of data inputs, and one or more receivers the transmitters and receiviers all being connected by a signal bus and the or each receiver having an instruction store, in-

- 4 -

cluding the steps of transmitting data from one of the inputs of the or one of the transmitters serially in such a way as to indicate which input the data emanates from to the or each of the receivers via the signal bus and instructing the, or each of the, relevant receivers to act on the data transmitted by using the or the relevant instruction store.

With the above defined system a datum at any given input can be routed to any number of outputs. This invention is particularly applicable but not exclusively so, to multiplexing the control and data acquisition signals in vehicles.

Each transmitter is effectively assigned a code and each has a plurality of data inputs each of which is assigned a number, all serially sharing a data highway of signal bus in the method generally referred to as multiplexing. Each transmitter sends a serial string of data bits appropriate to the state of the plurality of inputs, in an order which signifies the number and hence the identification of each datum, together with the transmitter code. The purpose of the instruction store, which advantageously may be a read only memory R.O.M. is effectively to instruct the corresponding receiver to route the datum in a given serial position from a given coded transmitter to a specific output port of the receiver.

This system is therefor different from the previous system described above in that each transmitter input has an address rather than each output. This means that a given transmitter consists of blocks of bits giving the transmitter code together with all datum bits sent serially in a specific order. The transmitter hardware is very much smaller in its electronic implementation, and the length of the transmission is very much shorter because less bits are required. Hence the information is transferred very much faster and the capacity is greatly increased.

In the new system each receiver may be made identical, and each is instructed as to which datum input should be received by which of the receiver's plurality of outputs by an associated R.O.M. This gives the advantage that a given input can communicate with any number of outputs in any of the receivers simultaneously if the associated R.O.M.s hold the appropriate instructions. In this way when a side light switch is closed in a vehicle for example, specific outputs in four receivers sited at the corners of the vehicle will each simultaneously receive the instruction and four lights will go on simultaneously.

In a general multiplexing system of the above described type in which a number of transmitters asynchronously share a signal bus which may transmit data using electrical acoustic or optical means, there exists the possibility that two or possibly more transmitters could transmit coincidentally with the result that they mutually corrupt each others transmission.

According to another aspect of the present invention, there is provided a multiplex information handling system comprising a plurality of transmitters, each transmitter having a plurality of data inputs and one or more receivers, the transmitters and receivers all being connected by a signal bus so that information may be transmitted from each transmitter along the signal bus, each transmitter being provided with means to abort its own transmission in the event that the waveform on the bus does not correspond to the intended transmitted waveform.

Also in such multiplex information handling systems a plurality of transmitters may be connected via bus drivers to a signal bus and each transmitter may transmit repeatedly allowing sufficient time in between its own transmissions to allow the other transmitters to transmit. However if a transmitter becomes faulty it may transmit in such a manner as to partially or completely lock out the transmissions of the other transmitters since correctly operating transmitters would not attempt to transmit simultaneously. It is therefore advantageous to protect against this kind of fault which would seriously upset the correct operation of this system.

According to a still further aspect of the present invention, there is provided a multiplex information handling system comprising a plurality of transmitters and a plurality of receivers all interconnected by a signal bus and means for detecting when any one transmitter attempts to occupy the signal bus to the exclusion of the or each other transmitter and for preventing such transmission from occupying the signal bus.

In general in the operation of such multiplex information handling systems, a given transmitter will request transmission by interrogating the signal bus and on finding it quiet, perhaps low, for a continuous given period will then transmit its data. However, if the signal bus is continuously high, then no transmitter will ever transmit and the multiplex system fails. To overcome this problem a fault detection circuit may be provided together with appropriate fusing such that, if a fault drives the signal bus continuously high, the offending part of the multiplexing system is blown off the line, so that the rest of the multiplexing system can continue to communcate.

According to a still further aspect of the invention, there is provided a multiplex information handling system comprising a plurality of transmitters and receivers all interconnected by a signal bus to which they are connected by means of respective bus drivers, the bus drivers being connected to the signal bus through respective fuses and circuit means being provided for detecting a continuous voltage state on the signal bus and being operative, when a state is so detected, to provide a low impedance connection from the fuse to a supply to blow the fuse of the transmitter or receiver generating the voltage.

In a specific embodiment a number of general transmitters and receivers are connected to the signal bus and are arranged in the form of a number of spurs each being serially supplied through a fuse. At a suitable junction of the spurs the signal bus is connected to the circuit means for detecting a continuous steady state voltage level on the signal bus and having so detected such a voltage, the signal bus is connected to an electrical supply of opposite polarity with a low enough resistance to blow one of the fuses.

In order that the invention may be more clearly understood, several embodiments of the invention will now be described, by way of example, with reference to the accompanying drawings, in which:-

Figure 1 shows a block circuit diagram of a digital control transmitter for a multiplex information handling system,

Figure 2 shows a block circuit diagram of a digital control receiver for a multiplex information handling system,

Figure 3 illustrates the pulse transmission timings for the transmitter of Figure 1,

Figure 4 illustrates the pulse transmission timings for the receiver of Figure 2,

Figure 5 illustrates a modification of the multiplex information handling system,

Figure 6 shows four graphs illustrating the operation of the modification of Figure 5,

Figure 7 shows a block circuit diagram for converting an analogue signal into a square wave mark-space ratio proportional to the analogue voltage,

Figure 8 is a block diagram representing part of a multiplex information handling system as it might be organised in an automobile,

Figure 9 is a block diagram of the system of Figure 8 but with supervisory units attached for use in garage servicing,

Figure 10 is a circuit diagram of a detector and inhibitor for detecting and inhibiting faulty operation of a transmitter of a multiplex information handling system, and

Figure 11 is a circuit diagram of a fault detection system including fusing enabling a faulty part of a multiplex information handling system to be isolated from the system.

The multplex information handling system comprises a plurality (sixteen) of transmitters and a plurality of receivers. All are interconnected by a single signal bus and a single power bus. Each of the transmitters has eight inputs and transmits four bits to identify itself as 1 of 16, followed by bits representative of the

-11-

states of its 8 inputs, in order. The transmissions are fronted by a sync. pulse, and the data are interleaved with clock pulses in the most efficient modes for the oscillator tolerance and overall number of bits (twelve).

The receiver disseminates the transmission producing sample pulses at the appropriate times. The receiver incorporates a read only memory and, bit by bit, as the data arrives it is compared with corresponding bits in 8 X 16 bit words held in the memory one word for each output. The location of the word in memory identifies which output of the receiver it relates to. The first four bits of the words identify the transmitter box number to which that word and hence the associated output, responds to. Subsequent bits in the words identify which of the transmitter inputs the output should respond to, which requires a minimum of 3 bits but 8 bits if a parallel check is made directly against the 8 data bits in the transmission. The remaining bits in the stored words may be used to hold information on whether or not the output should be cleared on the signal bus continuously high signal (C.H.C) whether a post transmission high is necessary when the output is about to change state or any other information relevant to the output.

On arrival of the fourth transmitted bit the transmitter number has been completely specified and the receiver registers which of the 8 outputs are due to receive new data. When the first data bit arrives next, the outputs whose words in memory responds to any input number 1 of a transmitter attempt to register the new data bit. As subsequent data is received the same process occurs for each data bit, appropriate to the 2nd, 3rd, 4th etc. transmitter inputs.

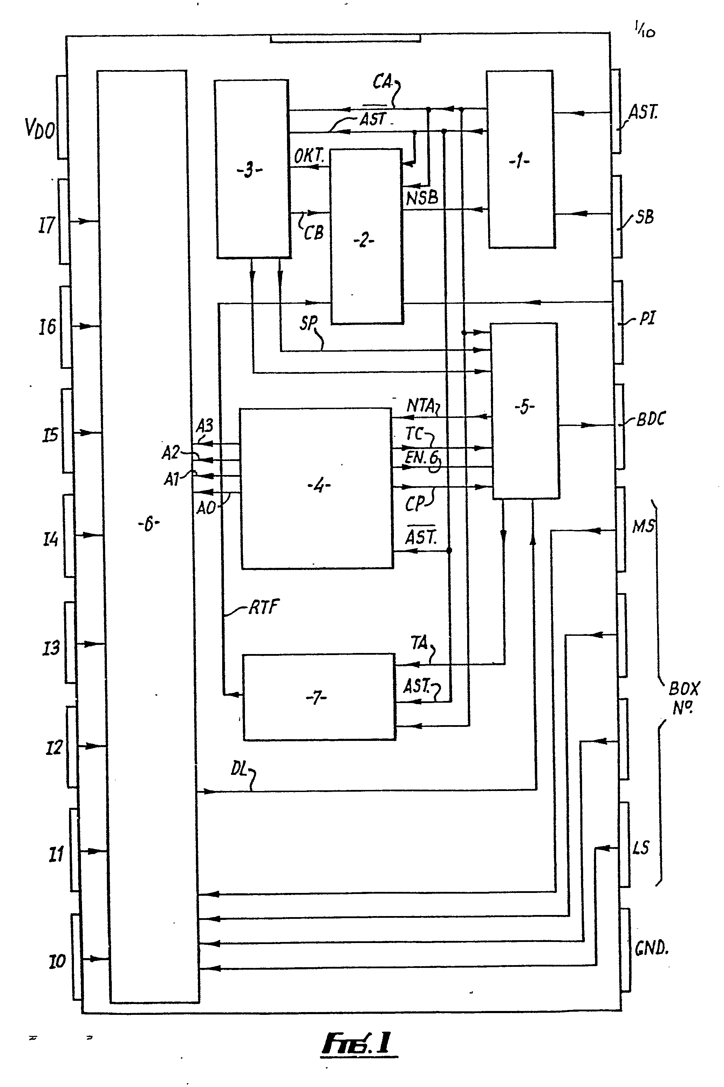

The description and operation in detail of a transmitter and receiver of the above system will now be described in detail with reference to Figures 1, 2, 3 and 4 of the accompanying drawings.

The transmitter is illustrated in Figure 1 and comprises:

    1.  A clearing circuit

    2.  A priority circuit

    3.  A synchronization pulse generating circuit

    4.  A rhythm generator

    5.  An output circuit

    6.  Multiplexers

    7.  A repeating counter

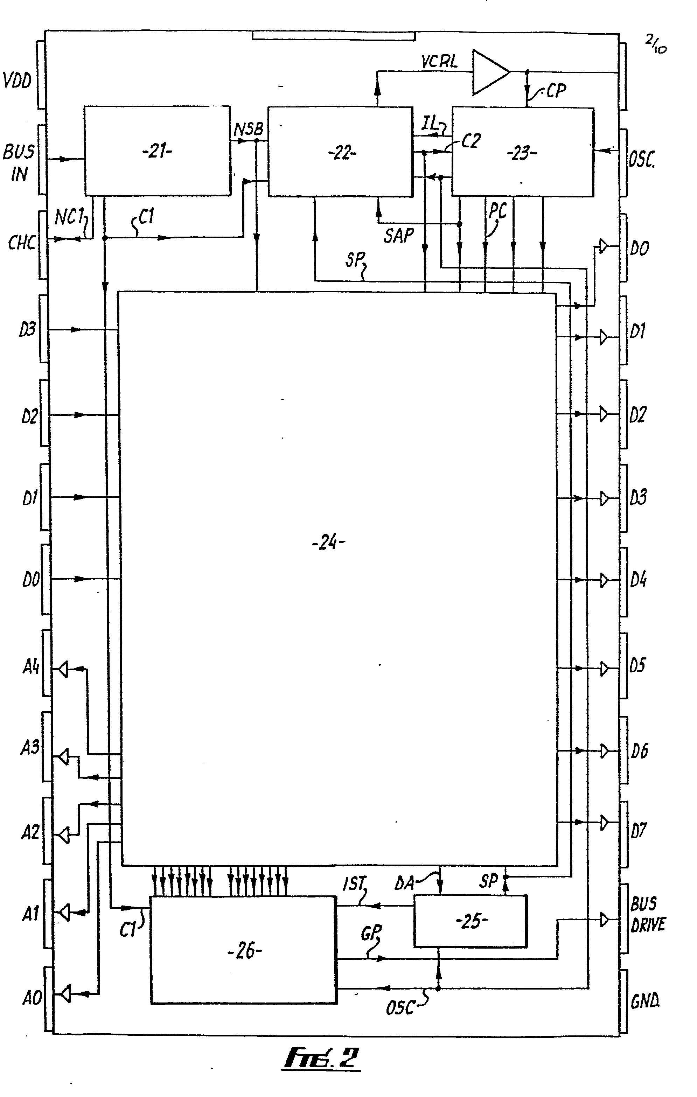

The receiver is illustrated in Figure 2 and comprises:

    21.  A clearing circuit

22. A pulse discriminator

23. A director controller

24. A data director

25. A switching delay circuit

26. A post transmission high pulse generator

When power is applied to the transmitter and receiver the signal bus may be tied externally at a logic high or may be low and may be driven by a bus driver circuit external to the transmitter and receiver. With the signal bus high on power up a clear signal may already exist in the clearing circuits 1 (Figure 1) and/or 21 (Figure 2). In Figure 1 this is denoted "CLEAR A" (Active High) on line CA and it clears circuits 3, 5 and 7 directly and in consequence circuit 2 is cleared by "CLEAR B" on line CB (Active High) from circuit 3 and circuit 4 is held reset by the high which exists ($\overline{\text{TRANS.ACHIVED}}$) on line NTA from circuit 5.

In Figure 2 the clearing signal produced by clearing circuit 21 is denoted "CLEAR 1" (Active High) on line C1 and its inverse "$\overline{\text{CLEAR 1}}$" is passed out as an active LOW clear to external circuits on line NC1.

Signal "CLEAR 1" clears circuits 22 and 26 directly. In consequence of signal "CLEAR 1", "CLEAR 2" on line C2 clears circuits 23 and 24 and circuit 24 thus has the "DATA COMPLETE" signal on line DA high and this holds circuit 25 reset.

If on power up these clear signals do not exist, then if the bus remains high for 3072T ($T = \dfrac{1}{2F}$ where F is the frequency of the highest fundamental chosen to be transmitted on the signal bus) this will produce signal "CLEAR A" on line CA in the transmitter and if the bus remains high for a further 1024T "CLEAR 1" on line C1 will be produced in the receiver (Figure 2).

As soon as the bus goes low signal "CLEAR A" will disappear and signal "CLEAR 1" will disappear after a time RC defined by a resistor R in circuit 21 and a capacitor C connected externally from "CLEAR 1" (i.e. inverse of signal "$\overline{\text{CLEAR 1}}$") to ground. When the signal bus is low signal "CLEAR A" cannot exist and to generate a clear signal the bus must be put High for 3072T. Signal "CLEAR 1" will be high (and consequently "$\overline{\text{CLEAR 1}}$" low) for a time RC where R and C are defined above. Thereafter it will go low until such time as the bus is put high for 4096T or longer.

When the signal bus SB is high for more than a time of 4096T:

Signal "CLEAR A" stands high

Signal "CLEAR 1" stands High and

Signal "$\overline{\text{CLEAR 1}}$" stands Low

Signal "$\overline{\text{CLEAR 1}}$" will normally disable the driving oscillator (period T/2) and its divided by 2 output (period

-15-

T) and any other selected external circuits.

As soon as the bus goes low the clearing signals in the transmitter disappear. In the receiver they disappear after RC seconds. So nothing happens for RC seconds as "CLEAR 1" disables the oscillator (which drives the receiver) and its divided by 2 output hereafter denoted AST (which drives the transmitter).

If priority is NOT activated by a falling edge on the priority input, the transmitter will commence by taking no action until the repeating counter 4 has reached a count of 3072T at which point the "REPEATED TRANSMIT FLAG" signal on line RTF goes high and this is received by circuit 2. If priority had been activated the "TRANSMIT FLAG" on line RTF would have been raised high internal to circuit 2 by the priority input PI.

The transmitter now times the bus low condition and as soon as the bus has remained continuously low for 12T, if activated by signal "REPEATING TRANSMIT FLAG", or 8T if activated by the priority input PI, it puts the "O.K. TRANS" line OKT high. This causes the sync. generator 3 to immediately generate a high pulse of 8T on the "SYNC" line SC which passes directly through the output circuit to a bus driving circuit BDC connected external to the transmitter. The bus therefore goes high for time period 8T immediately after the "O.K. TRANS" line OKT goes high. -16-

As soon as the signal bus goes high, in this case with a sync. pulse, all other transmitters are disabled from transmitting even if they have their "TRANSMIT FLAGS" high. Such transmitters continue to time the signal bus low conditions until they succeed in generating a sync. pulse, and will succeed in an order determined by the relative speeds of their driving AST waveform (slowest last).

A sync. pulse is followed by the transmission of data on line DL interleaved with clock pulses on line CP necessary to calculate sampling times in the receivers. At no time during a transmission is the bus continuously low for long enough to allow the commencement of even a priority activated transmission.

When the clear signal disappears in the receiver its action commences with the pulse discriminator circuit 22 timing the duration of the bus highs. When a high pulse appears on the bus with duration of anywhere between 5T (lower sync. threshold LST) and 12T (upper sync. threshold) the discriminator accepts it as being a sync. pulse nominally of 8T duration. This allows $\pm$ 14% tolerance on the transmitter and receiver timing devices, as do all timings (except post transmission high see below, for which it is not imperative).

At the falling edge of the sync. pulse circuit 22

-17-

generates a short high pulse (very much less than T in duration) on "CLEAR 2" line C2 which is active high clear. This ensures that the receiver is in an appropriate state to receive the ensuing data transmission. Additionally on the sync. falling edge circuit 22 puts up an internal flag registering that the sync. has been received and permitting action to be taken when clock pulses are received, until the complete transmission has been received whereupon this flag will be brought low again by the switch pulse on line SP and will not rise again until another sync. pulse of appropriate duration is recieved.

On transmission, on the falling edge of the sync. pulse, the transmitting transmitter resets the repeating counter 7 by a high of "TRANS. ACHIEVED" line NTA which remains for the duration of the transmission. Correspondingly the "$\overline{\text{TRANS. ACHIEVED}}$" line TA goes low for the duration of the transmission and this enables the rhythm generator 4 and the output circuit 5 to transmit clock and data pulses, when appropriate.

At the sync. falling edge the rhythm generator 4 inhibits the output circuit 5 from transmitting the DATA presented by the MPXS 6. Instead it generates a clock pulse format which is transmitted and comprises:

a) LOW   duration T                        )
                                           ) CLOCK PULSE
b) HIGH  duration T (clock pulse))
                                           ) FORMAT (CPF)
c) LOW   duration T                        )

-18-

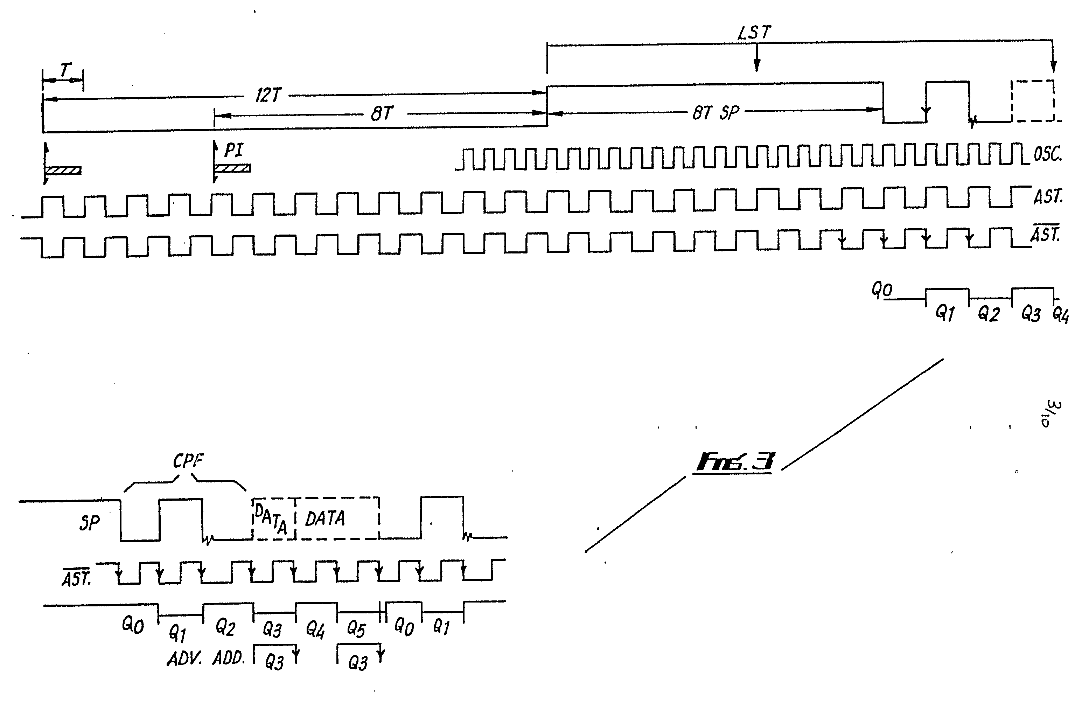

This and the other transmission timings are illustrated in Figure 3. The rhythm generator 4 then enables the MPX'S 6 to transmit the data which is present on the "DATA" line DL, for T duration. It then advances the address lines $A_{0-3}$ and the next data is transmitted for 2T duration. The rhythm generator 4 then advances the MPX Add lines again and resets itself. It continues in the same fashion transmitting a clock pulse format and 2 data bits until all 12 data bits have been transmitted. The order of the transmitted data bits is:

1. M.S. box no. bit
2. Box no. bit
3.  "    "    "
4. L.S. Box no. bit
5. Data i/p.  $\emptyset$
   |    |    |
   |    |    |
12. Data i/p.  7

When the last data bit (data i/p.7) has been transmitted the rhythm generator 4 puts the "TRANS. COMPL" line TC high and the output cct. 5 then puts "TRANS ACHIEVED" line TA low and its inverse NTA high. At this point the transmitter continues as from the priority NOT activated point above until such time as the bus is put continuously high for 3072T whereupon the transmitter continues for the condition above where the bus is continuously high

-19-

for more than 4096T.

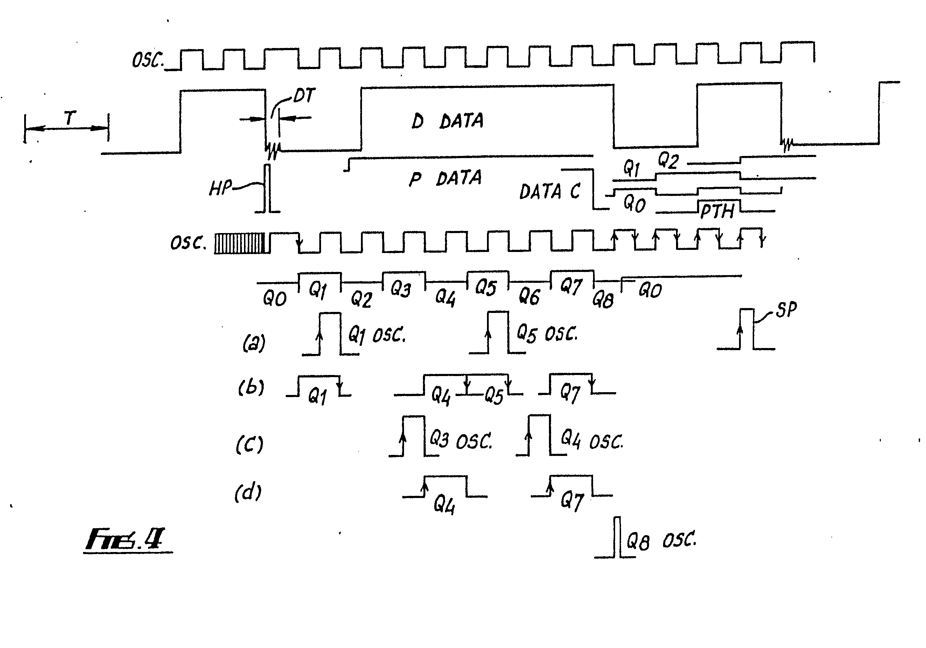

After the sync. pulse has been received the pulse discriminator 22 awaits the ensuing clock pulse.  On the clock pulse falling edge a short high pulse HP of duration very much less than T is generated by discriminator 22, on the "VALID CLOCK RECEIVED LINE" VCRL.  This pulse passes out of the receiver and re-phases the OSC and AST. which drive the receiver and associated transmitter.  This pulse, after an appropriate delay DT which allows the osc. rephase to occur, also passes to the 'Director Controler' 23 and initiates the pulses as illustrated in Figure 4 to occur on lines:

    a)   LOAD 4 BIT WORD"

    b)   "ADVANCE ADDRESS"

    c)   "SAMPLE PULSES"

    d)   "COMPARE· PULSES"

    e)   "RESET Q8 OSC"

These pulses are timed so as to cause the data director 4 to carry out the following actions for EACH of the two subsequent data bits.

    1)   Load 4 bit word presented ($D_0$—$D_3$) at the ROM data i/ps into 4 bit latch in data director 4.

    11)   Advance the ROM address lines $A_{0-4}$

    111)   Sample bus logic state as appropriate time and load into latch.

- 1V) Compare sampled bus data with each of the eight data bits present on $D_{0-3}$ and in 4 bit latch (i.e. previous $D_{0-3}$)

V) Take appropriate action

V1) Advance ROM address lines A0-4.

The above sequence of events follows each time a clock pulse is received on line CP and whilst it goes on the pulse discriminator 22 is inhibited by circuit 23 with a signal on inhibit line IL until the above actions are complete and another clock pulse is then awaited by discriminator 2. Sample pulses are also fed on line SAP to 22 so that the timing of data highs is aborted.

The associated read only memory (ROM) is employed as follows.

Each of the eight data bits which are compared with the transmitted data as it arrives relates to one of the 8 receiver outputs. Held in ROM are 8 X 12 bit words and each of these 8 words relates to one of the 8 receiver outputs. The eight bits which are compared with the data as it arrives comprise 1 bit from each of these 12 bit words held in ROM. When the first transmitted data bit is received it is compared with the first bit of each of the 8 words. The second transmitted data bit with the second bit of each of the eight words, and so too with 3rd and 4th received data bits.

The 12 bit words held in ROM will have the following structure:

| | TRANSMITTER 1/P | | | | | | | | TRANSMITTER NO. | | | |
|---|---|---|---|---|---|---|---|---|---|---|---|---|
| ROM WORD Ø i.e. it relates to receiver output Ø | 7 | 6 | 5 | 4 | 3 | 2 | 1 | Ø | | | | |
| | 1 | 1 | 1 | 1 | Ø | 1 | 1 | 1 | 1 | 1 | 1 | 1 |

L.S.      M.S.

last bit      12 bit word    1st bit

These 8 bits determine which of the transmitters inputs Ø-7 this receiver output should respond to.  A Ø bit denotes which transmitter i/p, so this receiver o/p. Ø responds to transmitter i/p 3.

These first 4 bits determine which transmitter this receiver output should respond to. The inverse no. is stored so this receiver o/p. Ø responds to transmitter no. ØØØØ

The above 12 bit word determines that receiver output Ø of the receiver with which this ROM is associated must respond to transmitter ØØØØ input 3.

The first four data bits which arrive are compared with the first four bits of each 12 bit word in ROM.  Any discrepancy will be registered and the corresponding intermediate data latch in data director 24 will not be permitted to load new data during the same transmission. When the first data bit corresponding to the state of the transmitter input Ø next arrives those reciever outputs whose words in ROM have a 5th bit of Ø and have not registered a discrepancy on box no. (i.e. the first four

-22-

data bits) will have that data bit loaded into their intermediate data latch in the data director 24 on the compare pulse emanating from the director controller 23 on line PC. The intermediate latches corresponding to the other receiver outputs remain unchanged. This procedure occurs for each of the 7 remaining data bits, data being loaded into intermediate latches if they did not register a box no. discrepancy AND they hold the 0 bit in their 12 bit word which corresponds to the appropriate transmitter input.

When the last data bit has been received and loaded as appropriate the "DATA COMPLETE" line DA goes LOW. switching delay circuit 25 then counts off 3T to ensure that the last data bit transmitted has gone. It then puts "INSPECT FOR P.T.H." line IST high for T. The data in the intermediate latches N0—N7 is then compared with the data standing at the receiver outputs D0—D7. If any output shows a discrepancy between the two bits of data (N0 and 0, N1 and 1 etc.) then the P.T.H. generator 26 will put a high pulse out on the "GIVE P.T.H." line GP of duration 512T. This pulse will be transmitted onto the bus by the bus driver circuit.4T from "DATA COMPLETE" line going low 25 gives a switch pulse SP which loads the new data in the intermediate latches throug and into the outputs. The switch pulse also clears the pulse discriminator 22 so that it takes no further action until another sync. of between 5T and 12T is recieved.

-23-

(The tolerance between a rising P.T.H. pulse and the final data bit of a transmission is $\pm$ 11%. No serious fault should occur even at $\pm$14%. The worst case occurs when the P.T.H. generator attempts to drive the bus high and the transmitter attempts for its last bit to drive the bus low. This state will never occur for more than 0.3T for a $\pm$ 14% tolerance. Data will not be corrupted in any receiver by the worst case and drivers will easily bear such a brief disagreement). In Figure 4 the delayed data position is shown at DDATA, the precise data position at PDATA and the data complete at DATAC.

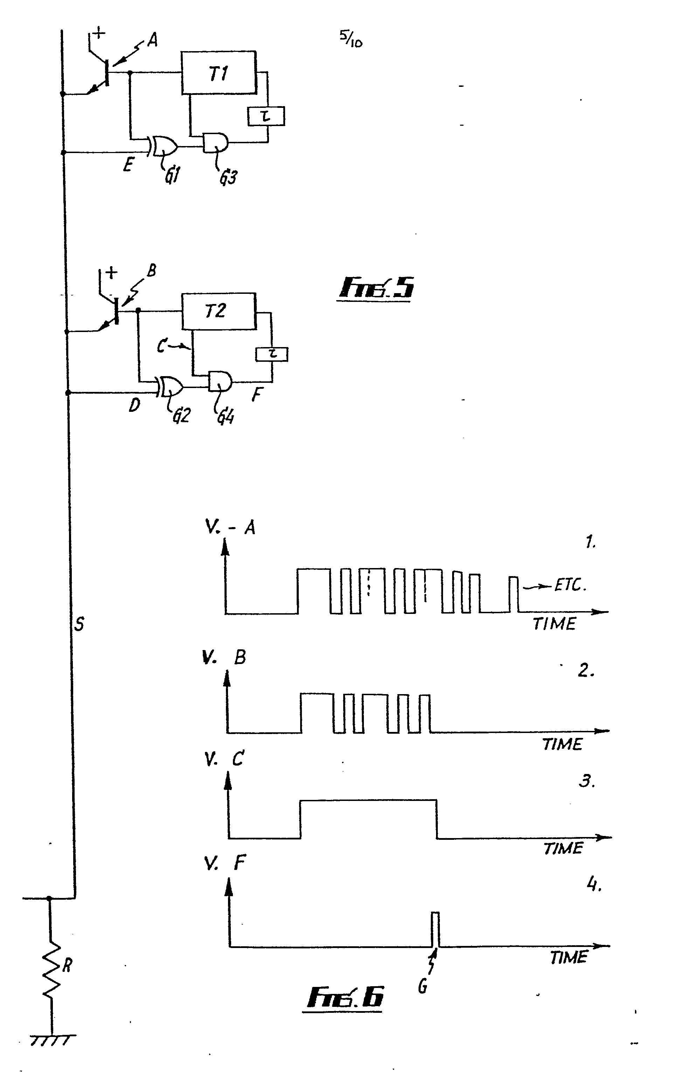

In a general multiplexing system of the above described type in which a number of transmitters asynchronously share a signal bus which may transmit data using electrical acoustic or optical means, there exists the possibility that two or possibly more transmitters could transmit coincidentally with the result that they mutually corrupt each others transmission. Figure 5 illustrates a transmitter modification for preventing such mutual corruption.

Referring to Figure 5 two transmitters T1 and T2 are shown connected to a common signal bus S via single ended bus drivers. Each transmitter has associated with it an exclusive OR gate (G1 and G2 respectively) which will produce a logic one at its output when the

-24-

signal on the signal bus S is different from the signal transmitted by the transmitter. In general when a transmitter is not transmitting there will be a difference and hence a 1 signal from the output of the exclusive OR gate. However when a transmitter is actually uniquely transmitting onto the signal bus, providing there are no propagation delays for signals going from points B to D, A to E, etc. then the output of the exclusive OR gate should remain constantly low during the transmission. If a signal C (which is a logic one only during transmission from T2) is extracted from the transmitter T2 and this is logically ANDed with the exclusive OR output then, F should always, for correct operation, be low. Transmitter T1 comprises AND gate G3 and transmitter T2 comprises AND gate G4 for the ANDing operation.

Therefore in the event that any other transmitter (or transmitters) happens to transmit simultaneously with T2, as soon as this other transmitter drives the signal bus to a logic one when T2 is actually at point B transmitting a logic zero, then F will rise and this signal F may be used to abort the transmission of T2.

Every transmitter may have this circuit and this means that when more than one transmitter transmits simultaneously every transmitter except one will abort their transmissions leaving one to complete its transmission which is correct throughout. Other transmitters will then transmit the correct versions of their aborted transmissions at their next earliest opportunities.

In practice there will be propogation delay of $P_D$ seconds between points B and D and this will give rise to a series of invalid pulses or spikes at F the width of which will be approximately equal to $P_D$ SECONDS. Therefore it is necessary to include a time constant $\tau$ to prevent such normal spikes from aborting correct transmissions.

Therefore to maintain the best possible protection $\tau$ must have the smallest possible value which is greater, by a safe amount, than $P_D$.

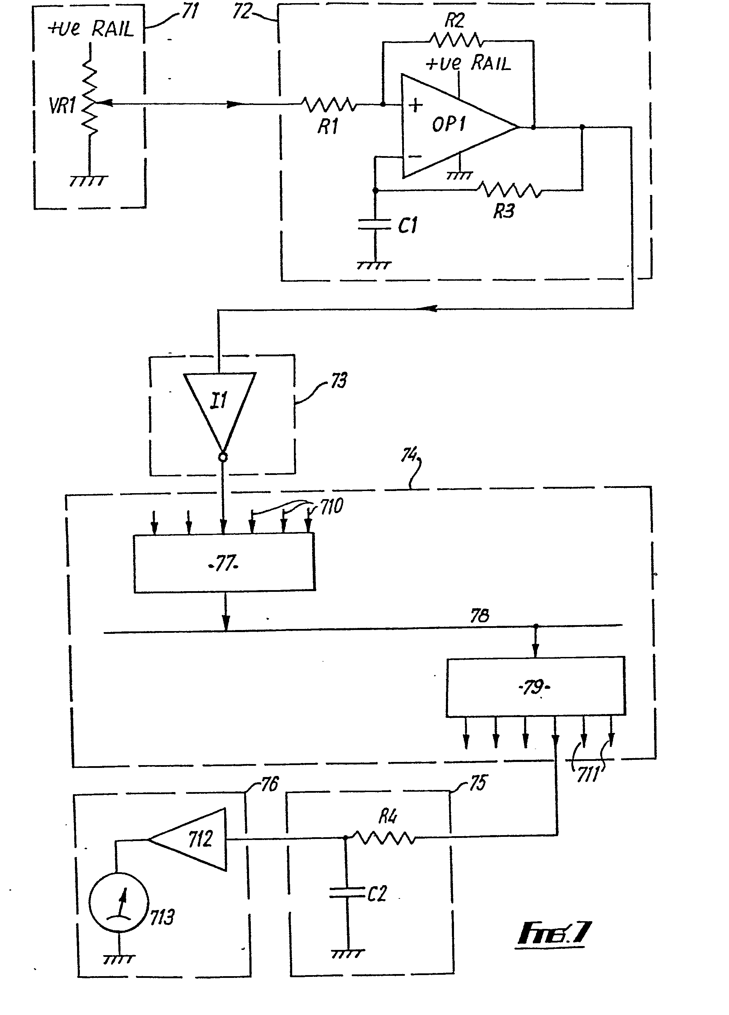

Graphs 1 to 4 on Figure 6 show two simultaneous transmissions being transmitted onto the signal bus S by T1 and T2. Up to point G the two transmissions happen to be identical so no difference is detected by either. However at point G, T1 drives the bus high when T2 is transmitting a low at point B (which under normal circumstances would allow the resistor R to pull the bus low) so immediately F rises since the discrepancy lasts for longer than time constant $\tau$ the transmission from T2 is aborted and T1 continues and completes its transmission which will therefore be

-26-

correct on the signal bus throughout. T2 will then await the end of T1's transmission before attempting to send again the correct version of the aborted transmission.

It will be appreciated that a digital channel of the above described system is used to transmit analogue information by converting analogue voltage into a square wave mark-space ratio which is proportional to the analogue voltage. This mark-space ratio appears at the output port and by suitable averaging one reproduces the analogue voltage. This system may therefor be used to convey analogue signals in cars.

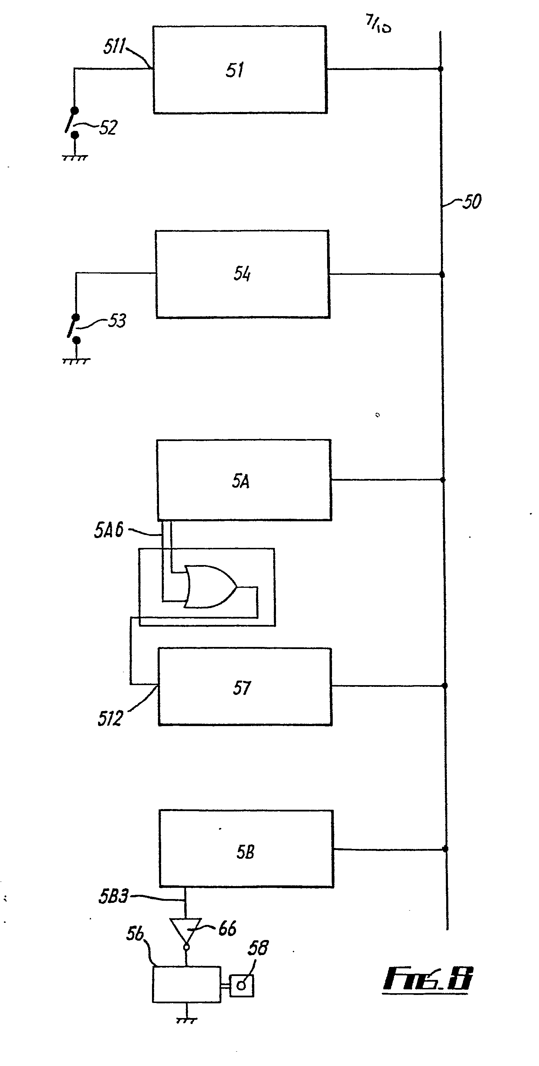

A means of generating an analogue voltage 71 will now be described with reference to Figure 7. A variable resistor VR1 is connected to a means 72 for generating a square wave the mark-space ratio of which is dependent upon the analogue voltage of 71. The square-wave signal is then inverted by 73 and the inverted signal is applied to one of the input ports 74 of a transmitter 77 of a multiplex information handling system 74 of the above described type.

The transmitter 77 communicates the square wave present at the appropriate input by repeatedly sampling and transmitting the input data via a common signal bus to a general receiver 79 one of the outputs 711 of which is programmed to receive the input data. The square wave present at the input of transmitter 77 is thus transferred to an output of receiver 79 providing the frequency of the square wave is considerably less than the reciprocal of the time between repeat transmissions of transmitter 77. The output square wave is then averaged by the simple C2, R4 circuit 75 and an analogue voltage is thereby established. This analogue voltage generated by circuit 75 is fed to an analogue display system 76 comprising a buffer amplifier 712 and a meter 713.

This embodiment is especially appropriate for vehicles for sending the analogue information such as engine temperature or the quantity of petrol stored in the tank to analogue meters using the same sensors and meters as are employed in conventional vehicles at present. In these conventional vehicles the sensor resistor is in series with the meter and increase in petrol and engine temperature results in a decrease in VR1 and hence a decrease in analogue voltage derived from VR1 but a greater current flow through the meter. A low analogue voltage generated across VR1 would, therefore, produce a small reading on the output meter 713 were it not for the presence of circuit 73 which inverts the square wave and hence produces a larger analogue output for a smaller analogue input.

For some applications where the inversion of the analogue signal is not required circuit 73 would simply be omitted. In this case an analogue voltage V present at the input to circuit 72 could generate an identical voltage V at the output of the averaging circuit 75.

Circuit 72 operates as follows. The output of OP1 will be situated close to either the upper rail or ground because of the high gain of the amplifier OP1. When the output is high the voltage at the non-inverting input marked + on OP1 depends upon the analogue input voltage together with the ratio of R2 to R1. The output will charge the capacitor C1 via R3 until the voltage at the inverting input marked - rises above that of the non-inverting input in which case the output will drop to ground potential. The potential at the non-inverting input also falls so that the capacitor discharges until the potential of the inverting input falls below that of the non-inverting input when the output rises to the positive rail. In this way the output of the operational amplifier OP1 constitutes a square wave the mean value of which can be related to the analogue input voltage. By choosing suitable values for R2 and R1 a substantially linear relationship can be produced.

If the frequency of the square-wave generated by circuit 72 is not substantially smaller than the repeat rate of transmitter 77, the correct analogue voltage will still be generated by the averaging circuit 75 even though the square-wave signal itself will not be reproduced at the output of the receiver 79. This is so, provided that the time constant of circuit 5 is long enough and that the oscillator controlling the repeat rate of transmitter 77 is totally independent of the oscillations produced by circuit 72.

The advantage of sending an analogue signal by this method can be listed as follows:-

1. A standard digital transmitter input and digital receiver output is used.

2. The analogue data is sent on a single channel; rather than using a conventional technique of A-D conversion at the input using a number of channels followed by D-A conversion at the output. The input and output circuits are considerably simpler than A-D or D-A circuits.

3. Analogue substraction can be achieved by including a simple inverter and reciprocal analogue function can be achieved.

-30-

In a multiplex information system such as previously described various management and supervisory tasks may need to be performed.

Management tasks may be defined as the enabling or inhibition, for transmission, of certain signal states where such enabling or inhibition is dependent on the state or states of other signals inputed to or held in memory in the system. For example in an automobile with an automatic gearbox it may be required that "Drive" is only permitted to be activated when the driver's seatbelt is on.

Supervisory tasks may be defined as those which override the normal operation of the system. In this case a signal, which under certain circumstances may be deemed illegal, may have already been received by the receiver output for which it was intended. The supervisory task would then be to transmit the rectifying signal to the same receiver output in a time which is less than would permit the signal to propagate further than the output. In some cases this later constraint might require the introduction of an artificial time constant at the receiver output although in reality many equipments which might be controlled by such a multiplex information system have an associated response time or time constant which is greater than the time taken to send and receive a remedial signal. An example of a supervisory task might be in the same automobile described above but in a garage or on the production line where a seatbelt override may be required to save time.

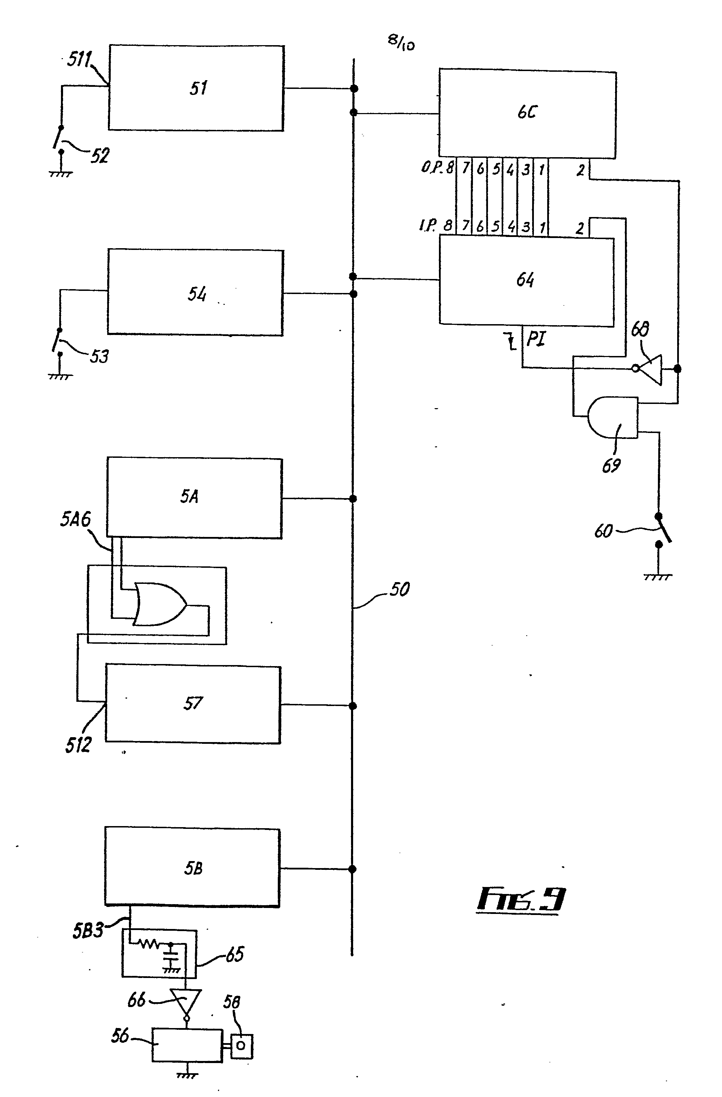

Referring to Figure 8 which is a block diagram representing part of a multiplex information handling system as it might be organised in an automobile. Transmitters and receivers are connected via a common signal bus 50. Transmitters transmit 20 times/sec. A LOW or grounded input represents an ON signal. A HIGH or floating input represents an OFF signal. The principal task is to select drive (referenced 58) on an automatic vehicle. When the seatbelt is off the information is present on the signal bus as it is included in the transmission of Transmitter 54, 20 times/sec. A receiver 5A is designated to respond to the seatbelt condition and the select drive switch 52 (whose status appears in the transmission of transmitter 51, 20 times/sec). For as long as the seatbelt switch 53 is open output 6 of this receiver 5A will be high and therefore with this very simple management logic transmitter 57 will always transmit a logic HIGH or OFF signal from its number 572 input. The receiver 5B which responds to transmitter input 572 will therefore always hold the gearbox solenoid switched off. However as soon as the seatbelt switch 53 is closed then receiver 5A output 5A6 will go LOW and input 572 of transmitter 57 will follow input 511 of transmitter 51 and therefore so will output 5B3 of reciever 5B which control the gearbox solenoid 56.

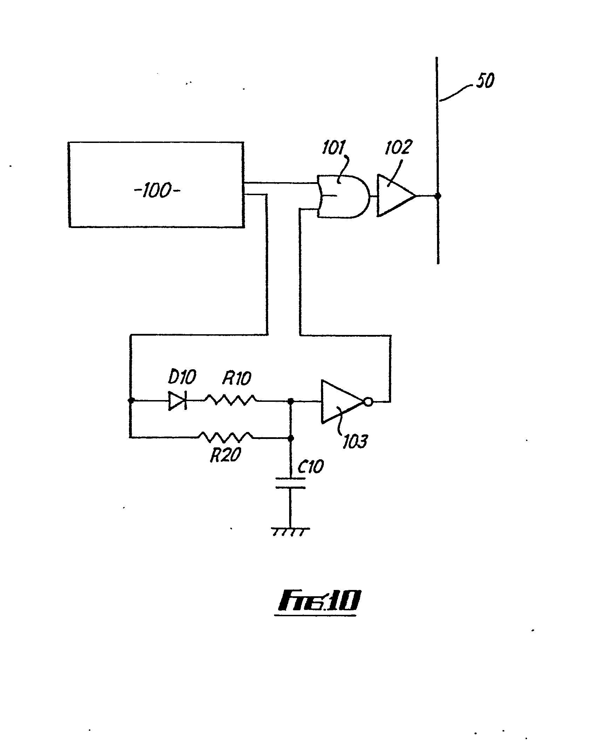

Referring to Figure 9, a block diagram of the multiplex information handling system is shown for the same vehicle which may now be in a garage for servicing. The mechanic may attach to the signal bus 50 a number of supervisory units. In this case only one is connected and permits him to select drive without having to put on the safety belt each time. The supervisory unit comprises a receiver 6C and duplicate transmitter 64, connected to the receiver through inputs (IP) 1 and 3 to 8 of the transmitter and outputs (OP) 1 and 3 to 8 of the transmitter. Output 2 of the receiver is connected through an inverting buffer 68 to the priority input PI of the receiver and input 2 of the transmitter is connected to the output of an AND gate 69. This gate 69 has two inputs one connected to the output 2 of receiver 6C and the other connected through a seatbelt override switch 60 to earth. With the override seatbelt switch 60 open the duplicate transmitter 64 will transmit a duplicate message to transmitter 54. When the override seatbelt switch 60 is closed the duplicate transmitter 64 will transmit duplicate transmission except on input 2 which will always transmit a LOW or ON signal. Each time the origingal transmitter 54 transmits a HIGH or OFF signal this will be received by receiver 6C and cause an immediate priority transmission of the duplicate transmitter 64 sending the remedial ON message. It may be necessary to incorporate a resistive capacitive Time Constant circuit 65 at output 3 of receiver 5B (or

-33-

output 6 of the receiver 5A) to ensure that the drive is not de-selected before the remedial priority transmission can be transmitted and received, but in reality the response of most control equipment is very much slower than the time taken for this remedial transmission which can be better than 300μs, which may represent a typical time to activate and receive a priority signal. This time constant circuit 65 is connected to the gearbox solenoid through an inverting buffer 66.

In such multiplex information handling systems a plurality of transmitters may be connected via bus drivers to a signal bus and each transmitter may transmit repeatedly allowing sufficient time in between its own transmissions to allow the other transmitters to transmit. However if a transmitter becomes faulty it may transmit in such a manner as to partially or completely lock out the transmissions of the other transmitters since correctly operating transmitters would not attempt to transmit simultaneously. It is therefore advantageous to protect against this kind of fault which would seriously upset the correct operation of the system.

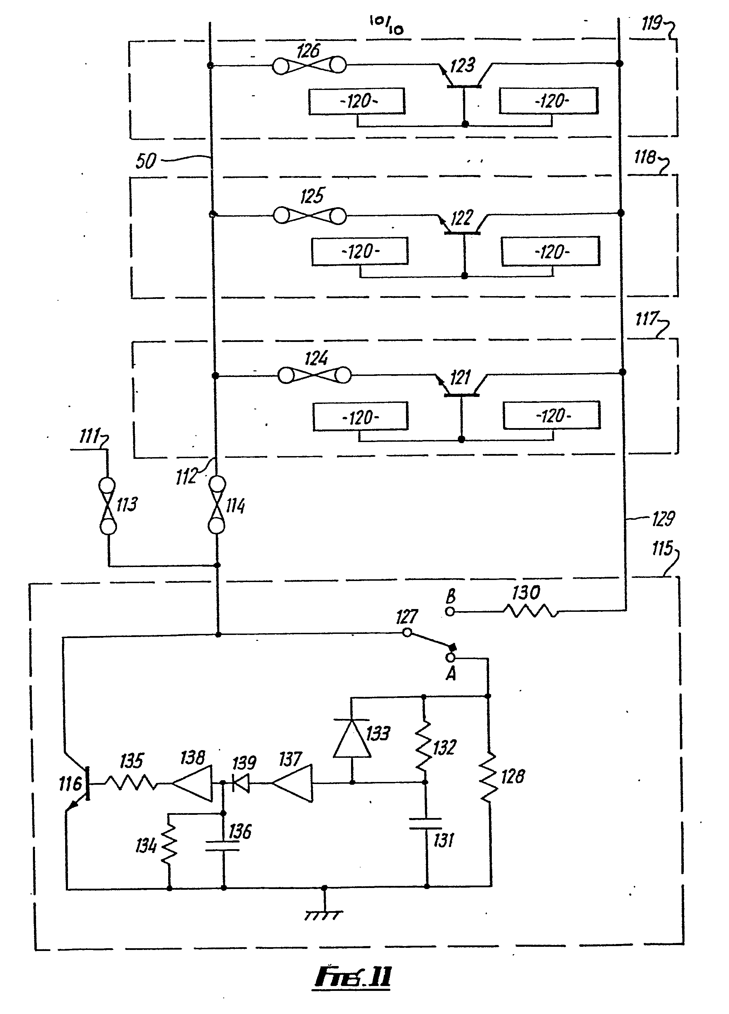

Referring to Figure 10 a transmitter 100 is shown driving the common signal bus 50 via a two input AND gate 101 and a single ended buffer 102. A circuit

comprising a diode $D_{10}$, resistor $R_{10}$ and $R_{20}$ capacitor $C_{10}$ and Schmitt invertor 103 is connected between one output terminal of the transmitter and the second input of the AND gate 101. One terminal capacitor $C_{10}$ is grounded. The transmitter output will swing between a minimum of zero volts and a maximum of $+V_{DD}$ volts. If the output of the transmitter has a duty cycle D% which is greater than

$$\left( \frac{R_{10} \cdot R_{20}}{R_{10}+R_{20}} \right) \Big/ R_{20}$$

then in general the capacitor $C_{10}$ will charge up more than it will discharge (assuming that the sourcing and sinking capabilities of the transmitter output are either equal or very much greater than $V_{DD}/ R_{20}$. Eventually therefore the capacitor $C_{10}$ will charge up beyond the threshold of the Schmitt buffer 103 whose output will then go low and stay low disabling transmission for as long as

$$D\% \geqslant \left( \frac{R_{10}R_{20}}{R_{10}+R_{20}} \right) \Big/ R_{20}$$

A correctly operating transmitter will transmit once every 50 ms; and occasionally when activated by priority it may have a burst of transmissions which will continue until the switch activating the priority has reached a steady state. The duration of this burst of transmissions will be the duration of the switch bounce + $t_{SB}$. A single transmission may have a duration of approximately 650us. During this transmission at worst the total time it will hold the signal bus high is approximately 470$\mu$s. Therefore, excluding priority transmissions, a transmitter which transmits correctly once every 50ms will have a maximum duty cycle of: $\frac{0.470}{50} = 0.94\%$.

Therefore one should detect a duty cycle which is greater than 0.94%.

Therefore

$$\left(\frac{R_{10}R_{20}}{R_{10}+R_{20}}\right) \Bigg/ R_{20}$$

should be greater than 0.94%.

Additionally in the case of priority a worst case might be to consider that the bus is high more or less continuously for the duration of the switch bounce time $t_{SB}$. This however will occur only very occasionally, and over a very long time period will have a duty cycle which is very much less than 0.94%. However these single bursts of priority transmissions must not trigger the switch to disable the buffer, therefore:

$$\left(\frac{R_{10}R_{20}}{R_{10}+R_{20}}\right) \cdot C_{10} > t_{SB}$$

-36-

(Assuming that the threshold voltage of the Schmitt inverter is equal to $e^{-1} \cdot V_{DD}$ where $V_{DD}$ is the rail voltage).

To gain the maximum protection

$$\frac{\left(\dfrac{R_{10}R_{20}}{R_{10}+R_{20}}\right)}{R_{20}}$$

should have the smallest reasonable value which is greater than 0.94%.

In general in the operation of such multiplex informatoin handling systems a given transmitter will request transmission by interrogating the signal bus and on finding it quiet, perhaps low, for a continuous given period will then transmit its data. However, if the signal bus is continuously high, then no transmitter will ever transmit and the multiplex system fails. To overcome this problem a fault detection circuit may be provided together with appropriate fusing such that, if a fault drives the signal bus continuously high, the offending part of the multiplexing system is blown off the line, so that the rest of the multiplexing system can continue to communicate.

Such a fault detection system is illustrated in Figure 11. Referring to Figure 11, two spurs 111 and 112 of the signal bus 50 are connected by respective fuses 113

-37-

and 114 to a unit 115 which contains a circuit to detect a continuous high voltage existing on the signal bus 50 by turning on a transistor 116 which is capable of sinking enough current to blow the most highly rated fuse in the embodiment. Connected to sput 112 of the signal bus 50 are shown three units 117, 118 and 119 each containing one or more transmitter or receiver units 120 which transmit onto the signal bus 50 via single ended bus drivers 121, 122 and 123 via fuses 124, 125 and 126 respectively each of which have a lower current rating than fuses 113 and 114. The bus drivers are current limited so that they are incapable of blowing any of the fuses in the embodiment. Unit 115 contains a switch 127 which when connecting the signal bus to point A of the switch provides the signal bus with a pull down resistor 128. The signal bus is pulled high by the appropriate driver providing a low impedance connection to a positive power bus 129. If switch 127 is in position B then the signal bus 50 is held continuously high by resistor 130, and the receivers could be programmed to go into a defined state. Also transmitters can no longer transmit, and so the multiplex system is disabled. However, with switch 127 in position B, the circuit in unit 115 does not detect a continuous high as the circuit is connected to point A.

Consider that switch 127 is in the go-position, A, and that a bus driver say 122 of unit 118 goes short circuit and permanently connects the signal and power buses. A capacitor 131 charges via a resistor 132 with the appropriate time constant and on reaching the triggering voltage of a Schmitt amplifier 137 the base of transistor 116 is fed via resistor 135 from Schmitt amplifier 138, and transistor 116 grounds the signal bus 50 with the result that fuse 125 blows, providing fuse 114 has a higher rating. In this way, the faulty unit 118 is blown off the line.

When transistor 116 grounds the signal bus, capacitor 131 discharges via a diode 133 turning off amplifier 137. However, during the on sequence a capacitor 136 was charged up via diode 139 and this capacitor together with Schmitt amplifier 138 continues to provide the base drive for transistor 116 via resistor 135 for a time given by the product of resistor 134 and capacitor 136 which is long enough to blow the appropriate fuse. The purpose of diode 133 is to ensure that under normal pulsed operation of the signal bus 50, the capacitor 21 discharges rapidly, and the input to amplifier 137 is normally low. This is achieved when resistor 132 is very much larger than resistor 128.

If the signal bus 50 consists of the inner core of a coaxial cable, the outer sheath of which carries the positive power bus 129, then the possibility of a short between the two buses exists. If this were to happen in spur 112 then in this case the circuit in unit 115 operates in exactly the same way as before but the result is that fuse 114 blows with the resultant

loss of spur 112. However, other spurs will continue to carry multiplexing information.

CLAIMS

1. A multiplex information handling system characterised by one or more transmitters (Figure 1), the or each transmitter having a plurality of data inputs (I0-I7), and means for transmitting information therefrom in a predetermined serial code to thereby identify a particular input and one or more receivers (Figure 2) the transmitters and receivers all being connected by a signal bus (50) and the or each receiver having an instruction store operative to instruct the receiver which input datum to respond to.

2. A multiplex information handling system characterised by a plurality of transmitters (T1, T2) each transmitter having a plurality of data inputs (I0-I7) and one or more receivers (Figure 2), the transmitters and receivers all being connected by a signal bus (50S) so that information may be transmitted from each transmitter along the signal bus, each transmitter being provided with means (G1, G3; G2, G4) to abort its own transmission in the event that the waveform on the bus does not correspond to the intended transmitted waveform.

3. A multiplex information handling system as claimed in Claim 1, characterised in that there are a plurality of transmitters (T1, T2) and each transmitter is provided

-41-

with means (G1, G3; G2, G4) to abort its own transmission in the event that the waveform on the bus does not correspond to the intended transmitted waveform.

4.  A multiplex information handling system as claimed in Claim 2 or 3, characterised in that the means to abort includes logic circuitry comprising an exclusive OR gate (G1, G2) operative to produce a logic one at its output when the signal on the signal bus (S) differs from the signal transmitted by the transmitter (T1, T2) and an AND gate (G3, G4) operative to AND the output from the OR gate and from the or each other transmitter whereby to produce a signal when another transmitter is transmitting for aborting the transmission of the first mentioned transmitter.

5.  A multiplex information handling system as claimed in Claim 2, 3 or 4, characterised in that the means to abort comprises a circuit ($\tau$) for introducing a delay into its operation so that the means are not activated by spurious signals resulting from propagation delay of signals between the means to abort of one transmitter and that of another transmitter.

6.  A multiplex information handling system as claimed in Claim 1 or 3 or Claim 4 or 5 when appendant to Claim 3, characterised in that the or each instruction store

-42-

is a read only memory.

7.  A multiplex information handling system as claimed in any preceding claim, characterised in that there are a plurality of transmitters (51, 54) and receivers (5A, 5B) and means are provided to generate signals dependent on the state of signals received by receivers along the signal bus, pieces of control equipment (57) associated with the transmitters and receivers responsive to signals received by an associated receiver along the signal bus (50) and signal priority establishing means (6C, 64), the transmitters being operative to transmit signals along the signal bus representative of the operational state of associated control equipment (53) and/or pieces of equipment (56) controlled by the control equipment under the control of the signal priority establishing means.

8.  A multiplex information handling system as claimed in Claim 7, characterised in that delay means (65) are provided to delay the implementation of a received signal for longer than the priority transmission and reception of a remedial signal would require.

9.  A multiplex information handling system characterised by a plurality of transmitters (Figure 1) and a plurality of receivers (Figure 2) all interconnected by a signal bus (50) and means (R10, R20, C10, 101, 102, 103) for detecting when any one transmitter attempts to occupy the signal bus to the exclusion of the or each other transmitter and for preventing such transmission from occupying the signal bus.

10. A multiplex information handling system as claimed in any of Claims 1 to 8, characterised in that there are a plurality of transmitters (Figure 1) and means (R10, R20, C10, 101, 102, 103) are provided for detecting when any one transmitter attempts to occupy the signal bus (50) to the exclusion of the or each other transmitter and for preventing such transmissions from occupying the signal bus.

11. A multiplex information handling system as claimed in Claim 9 or 10, characterised in that the means for detecting comprises a circuit (R10, R20, C10) for detecting when the duty cycle of each transmitter is greater than a predetermined maximum threshold value.

12. A multiplex information handling system as claimed in Claim 11, characterised in that the circuit comprises a capacitor (C10) connected between the junction of a pair of paralleled resistors (R10, R20) and a Schmitt inverter (103), the resistors (R10, R20) and inverter (103) being connected with logic circuitry (101, 102) between the transmitter (100) and signal bus (50), such that when the transmitter (100) transmits for longer than the predetermined time the output from the inverter (103) goes low and, through the logic circuitry (101, 102), disables the transmitter (100).

13. A multiplex information handling system characterised by a plurality of transmitters (120) and receivers (120) all interconnected by signal bus (50) to which they are connected by means of respective bus drivers (121, 122, 123), the bus drivers being connected to the signal bus (50) through respective fuses (124, 125, 126) and circuit means (115) being provided for detecting a continuous voltage state on the signal bus (50) and being operative, when a state is so detected, to provide a low impedance connection from the fuse (124, 125, 126) to a supply to blow the fuse (124, 125, 126) of the transmitter or receiver (120) generating the voltage.

14. A multiplex information handling system as claimed in any of claims 1 to 12, characterised in that the transmitters and receivers (120) are all connected to the signal bus (50) through respective bus drivers, (121, 122, 123), the bus drivers being connected to the signal bus through respective fuses (124, 125, 126) and circuit means (115) being provided for detecting a continuous voltage state on the signal bus and being operative, when a state is so detected, to provide a low impedance connection from the fuse (124, 125, 126) to a supply to blow the fuse of the transmitter or receiver (120) generating the voltage.

15. A multiplex information handling system as claimed in Claim 13 or 14, characterised in that the transmitters and receivers are arranged in a number of spurs (117, 118, 119), each spur being fused and connected to the signal bus (50) and the transmitters and receivers (120) of each spur being connected thereto through a fuse (124,125, 126).

16. A multiplex information handling system as claimed in Claim 13, 14 or 15, characterised in that the circuit means (115) for detecting a continuous voltage comprises a capacitor (131), an amplifier (137) and a transistor (116), the capacitor being connected to be charged through a resistor (132) from the signal bus (50) and, when a given threshold charged voltage is reached, to switch the transistor (116) through the amplifer (137) to ground the signal (50) and blow the fuse of the offending receiver, or transmitter.

17. A multiplex information handling system as claimed in any preceding claim, characterised in that the transmitters (Figure 1) and recievers (Figure 2) are also connected by a common power bus.

18. A method of operating a multiplex information handling system incorporating one or more transmitters (Figure 1), the or each transmitter having a plurality of data inputs (I0-I7), and one or more receivers (Figure 2) the transmitters and receivers all being connected by a signal bus (50) and the or each receiver having an instruction store, characterised by the steps of transmitting data from one of the inputs (I0-I7) of the or one of the transmitters serially in such a way as to indicate which input the data emanates from to the or each of the receivers (Figure 2) via the signal bus (50) and instructing the, or each of the, relevant receivers to act on the data transmitted by using the or the relevant instruction store.

19. A multiplex information handling system characterised by one or more transmitters (Figure 1),the or each transmitter having a plurality of data inputs (I0-I7), and means for transmitting information therefrom in a predetermined serial code to thereby indentify a particular input and one or more receivers (Figure 2) the transmitters and receivers all being connected by a signal bus (50) and a power bus, and the or each receiver having a read only memory operative to instruct the receiver which input datum to respond to.

20. A method of operating a multiplex information handling system incorporating one or more transmitters (Figure 1), the or each transmitter having a plurality of data inputs (I0-I7), and one or more receivers (Figure 2) the trans-- mitters and receivers all being connected by a signal bus (50) and a power bus and the or each receiver having a read only memory characterised by the steps of transmitting data from one of the inputs (I0-I7) of the or one of the transmitters serially in such a way as to indicate which input the data emanates from to the or each of the receivers (Figure 2) via the signal bus (50) and instructing the, or each of the, relevant receivers to act on the data transmitted by using the or the relevant read only memory.

*Fig.1*

0023105

*FIG. 2*

FIG. 3

FIG.4

_Fig.5_

_Fig.6_

FIG.7

FIG.8

0023105

Fig.9

FIG.10

FIG.11

| Category | Citation of document with indication, where appropriate, of relevant passages | Relevant to claim | CLASSIFICATION OF THE APPLICATION (Int. Cl. ³) |
|---|---|---|---|
| | **DOCUMENTS CONSIDERED TO BE RELEVANT** | | B 60 R 16/02<br>G 08 C 15/00<br>H 04 L 11/16 |
| | PROCEEDINGS OF THE I.R.E., September 1952, pages 1079-1088<br>New York, U.S.A.<br>J.R. PIERCE et al.: "Nonsynchronous Time Division with Holding and with Random Sampling"<br><br>   * Page 1079, right-hand column, line 18 - page 1080, left-hand column, line 44; figure 1 *<br><br>-- | 1,18-20 | |
| E,P | INTERNATIONAL PUBLICATION WO - A - 80/01025 (THE BOEING COMPANY)<br><br>   * Page 12, lines 3-10; page 14, lines 15-20; page 16, line 5 - page 17, line 2; page 18, line 37 - page 19, line 10; claims 9-18; figures 1,2,5,6 *<br><br>-- | 1,18-20 | **TECHNICAL FIELDS SEARCHED (Int.Cl. ³)**<br><br>B 60 R 16/02<br>G 08 C 15/00<br>H 04 L 11/16<br>G 06 F 3/04 |
| E,P | GB - A - 2 013 452 (PATELHOLD)<br><br>   * Page 1, lines 82-98; page 1, line 127 - page 2, line 8 *<br><br>-- | 1,18-20 | |
| E,P | DE - A - 2 805 705 (PATELHOLD)<br><br>   * Page 9, lines 17-21; page 10, line 21 - page 11, line 2 *<br><br>-- | 1,18-20 | **CATEGORY OF CITED DOCUMENTS**<br><br>X: particularly relevant<br>A: technological background<br>O: non-written disclosure<br>P: intermediate document |
| X | US - A - 4 063 220 (METCALFE)<br><br>   * Column 5, line 28 - column 6, line 6; column 8, lines 13-37; column 12, line 65 - column 14, line 5; claims 1,9,15,16,22; figures 1,2,5 *<br><br>---         ./. | 2-5,9,10,13,16 | T: theory or principle underlying the invention<br>E: conflicting application<br>D: document cited in the application<br>L: citation for other reasons |
| | | | &: member of the same patent family, corresponding document |

The present search report has been drawn up for all claims

| Place of search | Date of completion of the search | Examiner |
|---|---|---|
| The Hague | 13-10-1980 | WANZEELE |

EPO Form 1503.1 06.78

| | | European Patent Office | EUROPEAN SEARCH REPORT | Application number EP 80 30 2252 |
| | | | | -2- |

## DOCUMENTS CONSIDERED TO BE RELEVANT

| Category | Citation of document with indication. where appropriate. of relevant passages | Relevant to claim |
|---|---|---|
| X | US - A - 3 919 461 (HUNTING) <br> * Claim 1 * | 2,3 |
| E | EP - A - 0 014 556 (WARD & GOLD-STONE) <br> * Claims 1,7 * | 7,8, 17 |
| | US - A - 3 973 170 (HOGAN) <br> * Claims 7-10; figures 1,2 * | 13,14 |
| | GB - A - 1 520 632 (THE GENERAL ELECTRIC COMPANY) <br> * Claim 1; figures 1-4 * | 13,14 |
| P,E | DE - A - 2 944 370 (SPERRY RAND) <br> * Page 1, line 18 - page 2, line 17; page 5: totality; figure 1 * | 13,14 |
| | BE - A - 874 722 (WARD & GOLDSTONE) <br> * Claims 1,2 * | 1,17 |

CLASSIFICATION OF THE APPLICATION (Int. Cl. 3)

TECHNICAL FIELDS SEARCHED (Int. Cl. 3)